# EUROPÄISCHE PATENTSCHRIFT

(11) **EP 2 006 608 B1**
(45) Veröffentlichungstag und Bekanntmachung des Hinweises auf die Patenterteilung: **28.07.2021**
(21) Anmeldenummer: 08011030.7
(22) Anmeldetag: 18.06.2008
(51) Int. Cl.: F24D 3/14, F24D 3/16

(54) **Wand- oder Deckenverkleidung**
Wall or ceiling cladding
Revêtement de mur ou de plafond

(30) Priorität: 18.06.2007 DE 102007028451; 24.06.2007 DE 102007029214
(43) Veröffentlichungstag der Anmeldung: 24.12.2008
(73) Patentinhaber: Klima-Top GmbH, 87700 Memmingen (DE)
(72) Erfinder: Bühler, Armin, 87733 Markt Rettenbach (DE)
(74) Vertreter: Patentanwälte Olbricht, Buchold, Keulertz Partnerschaft mbB

(56) Entgegenhaltungen:
- EP-A1- 1 489 241
- EP-A2- 0 406 476
- EP-A2- 0 772 006
- EP-A2- 0 849 541
- WO-A2-2007/033255
- DE-A1-102004 031 542
- DE-A1-102005 027 495
- DE-U1- 20 111 852
- DE-U1- 29 512 308
- DE-U1- 29 519 840
- DE-U1- 29 808 088
- FR-A1- 2 394 648
- GB-A- 747 670
- GB-A- 803 968
- US-A- 1 800 150
- US-A- 2 718 383
- US-A- 5 743 330
- US-A1- 2005 028 966
- US-A1- 2005 281 547
- US-B1- 6 283 382

## Beschreibung

Die Erfindung betrifft eine Wand- oder Deckenverkleidung mit einem Kühl- und/oder Heizungssystem, wobei die Wand- oder Deckenverkleidung mit wenigstens einem Halterungsprofil an der Wand oder Decke eines Bauwerkes befestigbar ist. Derartige Wand- oder Deckenverkleidungen sind bekannt. In Gebäuden, insbesondere Büro- und Gewerbegebäuden, werden häufig abgehängte Decken montiert. Diese Decken werden zunehmend als Heiz- und/oder Kühldecken ausgebildet. Aber auch akustisch wirksame, insbesondere akustisch absorbierende Decken werden mit gleichen oder ähnlichen Systemen montiert. Derartige Decken können selbstverständlich auch thermisch aktiviert werden und werden dabei kombiniert als Schallschutzdecke mit thermischer Aktivierung eingesetzt. Daneben sind auch noch einfache Deckensysteme zur Gestaltung der Decke oder als Installationsebene zur Aufnahme von Installationen bekannt. Dabei bestehen diese Installationsdecken in einigen Fällen aus einzelnen Platten, die meist ohne feste Verbindung in ein Rahmengerüst eingelegt werden. Die Ausführung der bekannten Systeme ist im Grundprinzip meist gleich. Ein Feinrost wird entweder direkt beziehungsweise mit Direktabhängern an einer Decke, einem Dach oder an einer Wand beziehungsweise, im Falle von abgehängten Decken, an einem Grobrost befestigt. Dieses Grobrost wird seinerseits z. B. an einer Betondecke oder Wand mittels in der Länge verstellbaren Drähten oder Blechen befestigt. Nach der Montage des Tragrostes beziehungsweise der Unterkonstruktion werden je nach Aufgabenstellung Platten in den Rost eingelegt oder platten- beziehungsweise paneelförmige Bekleidungen an dem Rost befestigt.

Wenn die plattenförmigen Bekleidungen als Gipskartonsysteme ausgebildet werden, müssen diese noch gespachtelt und geschliffen werden. Insgesamt sind die Arbeiten für das Bekleiden der Decken sehr aufwendig. Auch ist die Integration von Rohrregistern für Kühl- und Heizleitungssysteme äußerst kompliziert, was dazu führt, dass dafür gegebenenfalls zusätzliche Halterungen vorgesehen sein müssen oder aber das Rohrregister auf die Halterung für das Platten- beziehungsweise Paneelbedeckungssystem aufgelegt beziehungsweise aufgeklemmt werden. Im Falle einer Undichtigkeit eines Rohrleitungssystems kann es dazu führen, dass die gesamte Deckenverkleidung inklusive der Unterkonstruktion demontiert werden muss, um an das Rohrleitungsregister heranzukommen, um gegebenenfalls beschädigte Stellen auszuwechseln und/oder zu reparieren. Dieser Aufwand ist enorm hoch und es gibt derzeit keine Systeme, die es ermöglichen, dass man direkt ohne Demontage der Unterkonstruktion an das Rohrleitungsregister herankommt. Insgesamt sind auch die Arbeiten für das Bekleiden der Decken sehr aufwendig, insbesondere dann, wenn die Oberflächen gleich mehrere Eigenschaften aufweisen soll, wie beispielsweise Kühl- oder Wärmestrahlung, Schallabsorbierung usw.

Das Dokument EP 0 772 006 A2 offenbart ein Kühldeckenelement aus einer Blechplatte und einer darauf befestigten Rohrleitung, welche mäanderförmig über die Grundfläche der Blechplatte geführt ist. Die Rohrleitung weist dabei gerade ausgerichtete Strecken in Sicken der Blechplatte auf, in welcher sie eingelassen ist und darin festgehalten wird. Das Dokument zeigt alle Merkmale des Oberbegriffs von Anspruch 1.

Aufgabe der Erfindung ist es daher, eine Wand- oder Deckenverkleidung mit einem Kühl- und/oder Heizungssystem vorzuschlagen, die einfach an der Wand oder der Decke eines Bauwerkes befestigbar ist, die eine einfache Montage des Rohrleitungsregisters ermöglicht und die insbesondere die Möglichkeit einräumt, zu Wartungszwecken einfach an das Rohrleitungsregister zu gelangen.

Die Aufgabe der Erfindung wird gelöst durch eine Wand- oder Deckenverkleidung mit einem Kühl- und/oder Heizungssystem und wenigstens einer Deckplatte, wobei die Wand- oder Deckenverkleidung mit wenigstens einem Halterungsprofil an der Wand oder Decke eines Bauwerkes befestigbar ist, wobei das Halterungsprofil in befestigtem Zustand auf einer zu einem zu kühlenden beziehungsweise zu heizenden Raum des Bauwerkes auf der der Deckplatte zugewandten Seite ein Aufnahmemittel für das Rohrleitungsregister des Kühl- und/oder Heizungssystems aufweist, dessen Aufnahmeöffnung dem Raum zugewandt ist und an dem Halterungsprofil seitlich gesehen zwei Schenkel vorgesehen sind, die an der Oberseite, d. h. an der in befestigtem Zustand der Wand oder Decke des Bauwerks zugewandten Seite, d. h. auf der der Deckplatte abgewandten Seite, Abwinklungen besitzen und wobei erfindungsgemäß vorgesehen ist, dass die Abwinkelungen so ausgestaltet sind, dass sie zur Befestigung des Halterungsprofils an Verbindungsblechen einer Unterkonstruktion dienen können.

Im Stand der Technik ist es bisher bekannt gewesen, die Rohrleitungen jeweils beispielsweise in Wärmeleitbleche einzulegen, die auf ihrer vom Raum wegweisenden Seite eine Befestigungsmöglichkeit vorgesehen haben. Jetzt ist es möglich, das Rohrleitungsregister sowohl in der Vormontage als auch nachträglich, nach dem Anbringen der Halterungsprofile in diese einzuschieben, sodass auch später, für Wartungsfälle, ein leichter Zugang zu dem Rohrleitungsregister des Heiz- beziehungsweise Kühlsystems möglich ist. Des Weiteren wird der Aufwand der Montage erheblich reduziert, da es ja jetzt möglich ist, das Rohrleitungsregister sozusagen in das Halterungsprofil für die späteren Deckplatten oder Deckbahnen zu integrieren. Damit wird sowohl der Aufwand für die Montage als auch der Materialaufwand der Unterkonstruktion insgesamt verringert. Die Wand- oder Deckenverkleidung nach der Erfindung eröffnet dabei eine Reihe von Möglichkeiten für einfache Montagen für die Deckplatten beziehungsweise Deckbahnen, die den Aufwand für eine solche Wand- oder Deckenverkleidung insgesamt verringert. Auch der Aufwand für die Unterkonstruktion, falls erforderlich, wird reduziert. Eine später noch zu beschreibende Ausgestaltung reduziert den Aufwand für die Montage in erheblichem Maße, indem das Halterungsprofil direkt in die Deckenkonstruktion eingebunden ist beziehungsweise direkt an dieser angeordnet ist.

Entsprechend einer vorteilhaften Weiterbildung der Erfindung zeichnet sich die Wand- oder Deckenverkleidung dadurch aus, dass das Aufnahmemittel als Kanal ausgebildet ist, der in seiner Breite so bemessen ist, dass das Rohrleitungsregister aufgrund der Spannkraft des Materials des Halterungsprofils in dem Kanal gehalten ist. Wenn beispielsweise das Halterungsprofil aus Metall hergestellt wird, dann ist es möglich, den Kanal durch Abwinkeln beziehungsweise Biegen oder Tiefziehen so zu gestalten, dass dieser Kanal eine gewisse Spannkraft aufweist. Der Kanal kann dabei nutenförmig ausgebildet sein und sich entlang der Längserstreckung des Halterungsprofils erstrecken. Durch eine raumseitig offene Ausgestaltung des Aufnahmemittels als Kanal ist es möglich, diesen leicht federnd auszubilden und seine Bemessungen so zu gestalten, dass er gegebenenfalls zumindest an einer bestimmten Stelle des Kanals geringfügig schmaler ist, als der Außendurchmesser des Rohres vom Rohrleitungsregister. Dadurch ist es gegeben, dass man die Rohre aufgrund der Spannung des Halterungsprofils dauerhaft fixieren kann. Zudem ist ein leichtes Einschieben von unten beispielsweise mit einem Holzkeil oder - spatel oder dergleichen bei der Montage möglich, sodass auch hier eine Arbeitserleichterung in hohem Maße gegenüber den aus dem Stand der Technik bekannten Vorgehensweisen gegeben ist.

Eine vorteilhafte Ausgestaltung der Wand- oder Deckenverkleidung, wie vorher beschrieben, zeichnet sich dadurch aus, dass der Kanal U-förmig ausgebildet ist und um sich in Richtung der Wand oder Decke beabstandet und wenigstens einer an dem Halterungsprofil vorgesehenen, dem Raum zugewandten Auflagefläche für die Deckplatten beziehungsweise Deckbahnen der Wand- oder Deckenverkleidung erstreckt. Dadurch wird erreicht, dass die Deckplatten bündig auf den Auflageflächen des Halterungsprofils aufgelegt werden können, ohne dass das Rohrleitungsregister hier stört oder durch Abstandshalter gegebenenfalls dafür gesorgt werden muss, dass das Rohrleitungsregister nicht gedrückt beziehungsweise gequetscht wird. Das Rohrleitungsregister befindet sich in dem Aufnahmekanal, der sich von der Auflagefläche gesehen zur Wand beziehungsweise zur Decke hin erstreckt und so tief ausgebildet ist, dass er das Rohr des Rohrleitungsregisters aufzunehmen vermag. Vorteilhafterweise ist er dabei etwas tiefer vorgesehen, um das Rohr nicht direkt an der Deckplatte der Deckbahn anliegen zu lassen.

Gemäß einer möglichen Ausführung ist vorgesehen, dass zwei Auflageflächen vorgesehen sind und das als Kanal ausgebildete Aufnahmemittel zwischen den beiden Auflageflächen, insbesondere mittig angeordnet ist. Des Weiteren kann vorgesehen sein, dass das Aufnahmemittel zumindest auf seiner dem Raum abgewandten Seite eine Rundung aufweist, die der Rundung des Rohres an dessen Außendurchmesser entspricht beziehungsweise zu dieser korrespondiert. Das bedeutet, dass die Rundung gegebenenfalls geringfügig größer sein kann als die Rundung des Rohres. Diese mittige Anordnung hat den Vorteil, dass man eine sehr breite Auflagefläche für die Deckplatte beziehungsweise Deckbahn der Wand- oder Deckenverkleidung erhält. Zudem wird die Wärmeübertragung vom Rohr auf das Halterungsprofil günstig beeinflusst und die Abstrahlung nach unten ebenso.

Gemäß einer möglichen Ausführung ist vorgesehen, dass an dem Halterungsprofil und/oder der Deckplatte Befestigungselemente und/oder -mittel zur lösbar festen Befestigung der Deckplatte beziehungsweise Deckbahn an dem Halterungsprofil vorgesehen sind. Die Befestigungsmittel zur Befestigung der Deckplatte beziehungsweise Deckbahnen können dabei äußerst unterschiedlich ausgebildet sein. Die Erfindung ist hier auf keine Lösung eingeschränkt, sondern umfasst vielmehr viele Befestigungslösungen für das Befestigen von Deckplatten beziehungsweise Deckbahnen einer Wand- oder Deckenverkleidung. So ist es nach Ausgestaltungen der Erfindung vorgesehen, dass die Befestigungselemente klebende beziehungsweise selbstklebende, haftende beziehungsweise selbsthaftende und/oder magnetische Eigenschaften aufweisen.

Es kann auch vorgesehen sein, dass die Befestigungselemente als Klettverschluß, vorzugsweise als Klettband, als Clipsverbindung, Schraubverbindung oder dergleichen vorgesehen ist. Die Befestigungselemente können dabei sowohl an dem Halterungselement als auch an der Deckplatte beziehungsweise Deckbahn vorgesehen sein.

Befestigungselemente wie Schrauben oder Bolzen werden üblicherweise durch die Deckplatte beziehungsweise Deckbahn geschraubt. Dazu schlägt die Erfindung entsprechend einer Weiterbildung vor, dass der Kanal in seiner Tiefe so bemessen ist, dass durch die Deckplatte geführte Befestigungsmittel, z. B. Schrauben oder Bolzen, das Rohrleitungsregister nicht erreichen beziehungsweise beschädigen können. Man verwendet dabei entsprechend definierte Schrauben beziehungsweise Bolzen, die in ihrer Bemessung ausreichen, um die Deckplatte beziehungsweise Deckbahn an dem Halterungselement sicher zu befestigen. Für den Fall einer Fehlbohrung ist es jedoch vorgesehen, dass das Rohrleitungsregister beabstandet von der Auflageebene der Auflageflächen für die Deckplatten beziehungsweise Deckbahnen angeordnet ist, sodass eine Beschädigung vermieden werden kann. Insbesondere bei der Verwendung von sogenannten selbstschneidenden Schrauben beziehungsweise selbstbohrenden Schrauben, die an ihrer Spitze mit einer Bohrspitze versehen sind, sind hier Beschädigungen des Rohrleitungsregisters der Heiz- beziehungsweise Kühlleitung sicher vermieden. Nach dem Stand der Technik war es nicht auszuschließen, dass aufgrund einer Fehlbohrung das Rohrleitungsregister, egal ob es nun aus Kupferrohren oder aus Kunststoff gebildet war, zu beschädigen.

Es kann weiterhin vorgesehen sein, dass an wenigstens einer der Auflageflächen ein Magnet, bevorzugt als Magnetstreifen ausgebildet, vorgesehen ist, um Deckplatten aus magnetisch wirksamen Material, wie z. B. aus Stahlblech oder aus Stahlfolie beziehungsweise magnetisch wirkender Folie, durch die Magnetkraft zu befestigen. Selbstverständlich kann es nach der Erfindung auch vorgesehen sein, dass die Magnetstreifen an der Deckplatte beziehungsweise Deckbahn korrespondierend zu den Halterungselementen befestigt sind, sodass man die Deckplatte ebenfalls durch die Magnetkraft dauerhaft sicher an der Unterkonstruktion beziehungsweise an dem Halterungsprofil befestigen kann. Bevorzugt sind an beiden Auflageflächen Magnetstreifen vorgesehen.

Demnach wird gemäß einer möglichen Ausführung auch vorgeschlagen, dass das Halterungsprofil aus magnetisch wirksamen Material gebildet ist und die Deckplatte einen korrespondierend dazu vorgesehenen Magnetstreifen aufweist. Für andere Ausgestaltungen, die nicht magnetisch wirksame Befestigungsmittel verwenden, kann das Halterungsprofil aus anderem Material gebildet sein, so ist die Erfindung nicht auf Metall eingeschränkt.

Entgegen von aus dem Stand der Technik bekannten Lösungen verwendet die Erfindung gemäß einer möglichen Ausgestaltung bei der magnetischen Befestigung der Deckplatten beziehungsweise Deckbahnen Magnetstreifen, die sich direkt auf den Auflageflächen für die Deckplatten beziehungsweise Deckbahnen befinden. Es werden daher keine zusätzlichen Befestigungsmittel beziehungsweise Befestigungsausnehmungen am Halterungsprofil, welches auch als Wärmeleitblech wirkt, benötigt. Im Stand der Technik ist es dazu bekannt, entsprechende Ausnehmungen vorzusehen, in denen dann Magnete befestigt werden müssen. Die Magnete sind dabei relativ stark in ihrer Ausbildung. Die Erfindung verwendet als magnetische Halterung hier einen Magnetstreifen, der zwischen 0,5 bis 3 mm, bevorzugt 1 mm stark ist. Durch die gesamte Ausnutzung der Auflagefläche wird auch die Verbindung zur Deckplatte beziehungsweise Deckbahn hin sehr satt gebildet, wodurch der Wärmeübergang äußerst günstig beeinflusst wird. Des Weiteren wird das Gewicht und der Aufwand für die Herstellung des Halterungsprofils und der magnetischen Verbindung gegenüber den aus dem Stand der Technik bekannten Lösungen erheblich reduziert. Gemäß einer Ausführung wird vorgeschlagen, dass als Deckplatte beziehungsweise Deckbahn eine Metallfolie, ein Blech, vorzugsweise farb- oder folienbeschichtet, eine Gipskarton- beziehungsweise Fermazellplatte, eine Kunststoff- oder eine sogenannte PCM-Platte (phase change material) oder dergleichen vorgesehen ist. Wie ersichtlich, ist die Erfindung hier nicht auf ein bestimmtes Material eingeschränkt, sondern es ist möglich mit der erfindungsgemäßen Wand- oder Deckenverkleidung die verschiedensten Materialien für eine solche Wand- oder Deckenverkleidung einzusetzen. Die Verwendung einer PCM-Platte ist dabei insbesondere vorteilhaft, da es sich hierbei um ein neuartiges Material handelt, welches eine Art thermische Speichermasse bildet.

Des Weiteren ist es vorgesehen, dass die Deckplatte beziehungsweise Deckbahn aus elektrisch leitendem Material gebildet ist. Es ist auch möglich, dass ein transparentes Material zum Einsatz kommt, ebenso wie ein Schallschutzelement mit Perforierung.

Ferner ist es möglich, dass die Deckplatte als Deckelement mit endgültiger Oberfläche, z. B. mit einer Folienbeschichtung oder einer PCM-Beschichtung gebildet ist oder aber in einer ganz geschickten Variante, dass die Deckplatte beziehungsweise Deckbahn als Beleuchtungselement vorgesehen ist. Auch hierbei sind verschiedenste technische Möglichkeiten vorgesehen. So ist es möglich, die Deckplatte, wie bereits erwähnt, transparent zumindest partiell auszubilden, um dort Beleuchtungskörper verdeckt anbringen zu können. Es ist aber auch möglich, eine Folie zu verwenden, die durch Anstrahlen das Licht entsprechend reflektiert und so als Beleuchtung wirkt. Es ist auch möglich sogenannte Folien zu verwenden, die fluoreszierende beziehungsweise lumineszierende Eigenschaften aufweisen, die durch Anstrahlen bestimmte Lichteffekte erzeugen.

Es kann auch vorgesehen sein, dass zumindest die Deckfolie des Decken- beziehungsweise Wandelements elektrisch leitend ausgebildet ist. Selbstverständlich ist es auch möglich, Plattensysteme beziehungsweise Foliensysteme zu verwenden, die mit einer entsprechenden Beschichtung versehen sind. Dadurch lassen sich alle Oberflächendekore mit einer Wand- oder Deckenverkleidung nach der Erfindung realisieren. Die Verwendungsvielfalt beziehungsweise Anwendungsbreite der Lösung nach der Erfindung ist dabei erheblich höher als bei den im Stand der Technik bekannten Lösungen.

Bei einer Ausgestaltung als Schallschutzdecke ist es möglich, sogenannte Schallschutzelemente, vorzugsweise mit Perforierung zu verwenden. Dabei werden die Platten beziehungsweise Folien mit Löchern versehen, wodurch neben der schallschluckenden Eigenschaft dann noch eine Verbesserung der Kühl- beziehungsweise Heizleistung erreicht wird. Insbesondere für Klimaanlagen bietet sich diese Lösung an, weil sich dadurch die Kühlleistung insbesondere bei abgehängten Kühldecken erheblich erhöhen lässt. Magnetische Folien sind deutlich besser wärmeleitend als Gipskartonplatten oder Fermazellplatten, weshalb sich diese Variante immer dann anbietet, wenn eine hohe Kühl- beziehungsweise Heizleistung gefordert ist.

Ein weiterer möglicher Aspekt der vorgeschlagenen Lösung ist dadurch angegeben, dass das Halterungsprofil, wie vorher beschrieben, in beziehungsweise an einem Decken- oder Wandelement, welches beispielsweise als Wellblech- oder Trapezblechkonstruktion oder als Blechkonstruktion in Sandwichbauweise ausgebildet ist, vorgesehen ist. Es wird dabei davon ausgegangen, dass heutzutage Hallen oder Industriegebäude häufig als Wellblech-/Trapezblechkonstruktion, vorzusweise in Sandwichbauweise erstellt werden. Insbesondere werden dabei Dachkonstruktionen mit sogenannten Wellblech- oder Trapezblechkonstruktionen versehen, die gegen Wärmeverluste gedämmt sind. Dabei ist es beispielsweise vorgesehen, dass zwischen zwei Trapezblechen sich ein Dämmmaterial befindet, welches beispielsweise dort eingeschäumt wurde, wodurch eine stabile Verbindung des unteren und oberen Trapezbleches entsteht. Es ist möglich, dass das Halterungsprofil für das Rohrleitungsregister des Kühl- oder Heizleitungssystems in beziehungsweise an diesem Decken- oder Wandelement vorgesehen ist.

Es werden dabei zwei grundsätzlich unterschiedliche Varianten vorgeschlagen, nämlich zum einen, dass das Halterungsprofil in oder an der Trapezblechkonstruktion befestigt wird, das heißt es wird nachträglich an dem Trapezblech beziehungsweise an dem Wellblech oder an dem Sandwichelement angeordnet.

Eine besonders geschickte Variante schlägt vor, dass das Halterungsprofil in die Wellblech- oder Trapezblechkonstruktion beziehungsweise in die Sandwichkonstruktion eingeformt ist. Dazu bedarf es lediglich eines entsprechenden Werkzeuges, welches beim Herstellungsprozess der Wellblech- oder Trapezblechkonstruktion das Aufnahmemittel für das Rohrregister gleichzeitig mit den Abwinkelungen der Blechkonstruktion einformt. Dadurch gelingt es, die Vorteile, wie sie vorher für die Wand- oder Deckenverkleidung beschrieben wurden, auch für solche Konstruktionen zu nutzen und dort insbesondere sehr preisgünstig ein Heizungs- beziehungsweise Kühlsystem in die Decke oder Wand des Gebäudes zu integrieren.

Besonders vorteilhaft ist es dabei, wenn das Aufnahmemittel für das Rohrregister sich in den Sicken der Trapez- beziehungsweise Wellblech- beziehungsweise Sandwichkonstruktion befindet. Die Erfindung ist dabei nicht auf die üblichen Heiz- beziehungsweise Kühlsysteme eingschränkt, sonders es ist auch möglich, das Rohrregister als brennstoffverbrennendes Objekt auszubilden. Selbstverständlich können die Rohre des Rohrregisters auch als Leerrohre für Kabel, Schläuche, elektrische Heizleiter oder dergleichen verwendet werden. Auch hier ist die Erfindung sehr flexibel und nicht auf eine einzige Lösung eingeschränkt.

Gemäß einer möglichen Ausführung wird weiterhin vorgeschlagen, dass das Halterungsprofil in der Trapez- beziehungsweise Wellblechkonstruktion statisch wirksam angeordnet ist.

Ein weiterer möglicher Aspekt ist dadurch angegeben, dass die Oberfläche der Trapez- beziehungsweise Wellblechkonstruktion mit statisch wirksamen Material bekleidet beziehungsweise kaschiert ist.

Die vorhergehend beschriebene Variante eines Deckenbeziehungsweise Wandelementes, mit in dem Element integriertem Kühl- beziehungsweise Heizungssystem für eine Wand- und/oder Deckenheizung, insbesondere nach dem Wärmestrahlungsprinzip, hat gegenüber den aus dem Stand der Technik bekannten Lösungen den Vorteil, dass die Industriegebäude, die häufig als Wellblech- oder Trapezblechkonstruktion oder als Sandwichblechkonstruktion ausgebildet sind, jetzt ein Heiz- beziehungsweise Kühlsystem besitzen, das nach dem Wärmestrahlungsprinzip arbeitet, welches dadurch die Staubbelastung reduziert und die bekannte Werkhallenheizungen beziehungsweise -kühlungen problemlos ablöst. Die Vorteile liegen auf einer Hand. Während im Winter die Heizung nach dem Wärmestrahlungsprinzip mit der Lösung nach der Erfindung realisiert werden kann, kann in den heißen Sommermonaten eine Kühlung erfolgen. Beide Lösungen wirken mit hohem Effekt gegenüber den im Stand der Technik bekannten Konvektionslösungen wesentlich effizienter. Auch gegenüber anderen bekannten Heizsystemen, wie Gasheizungen oder Elektroheizungen, bietet die Lösung nach der Erfindung erhebliche Vorteile. Insbesondere ist es möglich, die Systemtemperaturen für den Heizungsbetrieb derart zu senken, dass es erstmals möglich ist, auch hohe Hallen mit niedrig temperierten Heizungssystemen, wie z. B. Wärmepumpen und Solarheizungen auszustatten. Selbstverständlich ist auch eine Kombination möglich, indem man beispielsweise auf der Dachoberfläche Solarkollektoren anbringt, die gleichzeitig die notwendige Wärmeenergie für das Heizungssystem zumindest teilweise liefern.

Der Einbau von Wärmeleitblechen beziehungsweise Halterungsprofilen in der Wellblech- beziehungsweise Trapezblechkonstruktion, insbesondere in den Sicken, bietet den Vorteil, dass sie bezüglich des Investitionsaufwandes und der Vorfertigung besonders einfach umzusetzen sind. Dabei ist es möglich, das Rohrleitungsregister in der Vorfertigung direkt anzubringen. Die Erfindung bietet allerdings auch die Möglichkeit, das Rohrleitungsregister erst nachträglich, sozusagen nach Montage der Wand- oder Deckenelemente anzubringen. Auch hier ist die Erfindung nicht auf eine einzige Lösung eingeschränkt, sie umfasst vielmehr alle vorher beschriebenen Varianten.

Eine Variante schlägt weiterhin vor, dass zumindest die dem Raum zugewandte Seite der Trapez- beziehungsweise Wellblech- oder Sandwichkonstruktion mit einer wärme- beziehungsweise kältestrahlenden Beschichtung versehen ist. Damit wird die Effizienz der Heizung beziehungsweise Kühlung weiter erhöht. Die Trapez- beziehungsweise Wellblechkonstruktionen sind dabei, wie bereits weiter vorn erwähnt, als Sandwichelement mit vorzugsweise integriertem Dämmmaterial, welche als Dämmmaterialschicht ausgebildet ist, vorgesehen.

Des Weiteren wird gemäß einer Ausführung vorgeschlagen, dass das Dämmmaterial statisch wirksame Eigenschaften besitzt. Nach der Erfindung ist auch eine Oberflächenbeschichtung, zumindest auf der dem Raum zugewandten Seite vorgesehen, die vorzusweise aus wärmeleitendem Material besteht.

Zusammenfassend lässt sich einschätzen, dass durch die vorgeschlagene Lösung neben Einbaukostenreduzierung auch deutliche Kosteneinsparungen erzielt werden können, da durch das System erstmalig die Systemtemperaturen für die Beheizung von Hallen deutlich gesenkt werden können. Des Weiteren ist es jetzt möglich, die Wellblech- beziehungsweise Trapezblechkonstruktion selbst mit einer speziellen Rille, nämlich dem Aufnahmemittel für das Rohrleitungsregister herzustellen, wodurch es möglich ist, ein mediumführendes Rohr beziehungsweise einen Heizleiter dort vorzusehen. In dieser Ausführung lässt sich das gesamte Decken- oder Wandelement des Wellblech- beziehungsweise Trapezblechgebäudes als Wärmeverteiler verwenden. Dadurch können besonders hohe Heiz- und Kühlleistungen erzielt werden.

Eine weitere Variante ist dadurch angegeben, dass die mediumführenden Rillen beziehungsweise Aufnahmemittel oder Kanäle direkt in einen Styropor- oder Purkörper eingeschäumt werden können. Die Oberfläche kann man aus Herstellungsgründen und zur Wärmequerverteilung mit geeigneten Materialien, z. B. Aluminium, Kupfer, Stahlblech usw., bekleiden oder kaschieren.

Ein weiterer Vorteil ist dadurch angegeben, dass auch bestehende Hallen mit dem erfindungsgemäßen Wand- oder Deckenverkleidungssystem nachgerüstet werden können. Dazu ist es lediglich notwendig, das Halterungsprofil dann an die vorhandenen Decken- und Wandkonstruktionen der Wellblech- beziehungsweise Trapezblechelemente des Gebäudes anzuordnen. Dabei ist es weiterhin möglich, das Rohrleitungsregister als sozusagen offenes System bestehen zu lassen oder aber auch eine Wand- oder Deckenverkleidung mit Deckplatten oder Deckbahnen vorzusehen. Auch hier ist die Erfindung in keinster Weise eingeschränkt.

Des Weiteren ist festzuhalten, dass sich alle vorher beschriebenen Varianten und Ausführungsformen problemlos miteinander kombinieren lassen. Dadurch ist die Vielfalt der Lösungsmöglichkeiten durch das erfindungsgemäße Wand- oder Deckenverkleidungssystem äußerst groß. Wenn das Element als Dachfläche verwendet wird, ist es sinnvoll, dass die dem Raum zugewandte Seite, z. B. trapezbeziehungsweise wellenförmig ausgebildet wird. Wenn sich dabei das Aufnahmemittel, nämlich die Nut zur Aufnahme des mediumführenden Rohres in der Hochsicke befindet, kann Konvektion wirkungsvoll vermieden werden. Dadurch erhöht sich die Oberflächentemperatur. Die Abstrahlung von Energie wird günstig beeinflusst. Als weiterer Vorteil der Trapez-/Wellblechform mit darin eingelassenem Rohr wird vorgeschlagen, dass die Oberfläche einem Reflektor gleicht, die Wärmestrahlung direkter auf den Boden strahlt. Zur Verstärkung dieser Wirkung kann die Profiloberfläche eine reflektierende Beschichtung erhalten. Außerdem wirkt die gesamte Dachuntersicht als großer Wärmestrahler. Gleichzeitig stellt die Trapez-/Wellenform eine statische Versteifung dar, wie sie gerade von solchen Elementen bekannt ist.

Eine Ausführung lässt sich auch realisieren, an einer zweischalig ausgeschäumten Metalltafel, wie sie für isolierte Wände oder Dächer auch verwendet werden. Diese können ebenfalls mit einem mediumführenden Rohrregister ausgestattet werden, welches Heizbeziehungsweise Kühlleistung gewährleistet. Neben den bereits beschriebenen günstigen Effekten für die Montage der Rohre beziehungsweise des Rohrleitungssystems selbst, wird bewirkt, dass kein Verlust an Gebäudehöhe entsteht. Auch findet keine Behinderung von in der Halle vorhandenen Halleneinbauten beziehungsweise Kranbahnen oder dergleichen statt.

Ausführungsbeispiele der Erfindung werden anhand der Figuren beschrieben.

Es zeigen:
- Fig. 1: eine dreidimensionale Darstellung eines Teiles der erfindungsgemäßen Wand- oder Deckenverkleidung,
- Fig. 2: Schnittdarstellung durch einen Teil einer Ausführungsform der erfindungsgemäßen Wand- oder Deckenverkleidung
- Fig. 3: Ausschnitt durch eine Variante mit Unterkonstruktion der Wand- oder Deckenverkleidung nach der Erfindung und
- Fig. 4 bis 6: Wellblech-, Sandwich- beziehungsweise Trapezblechkonstruktion mit integrierter Wand- oder Deckenverkleidung nach der Erfindung.

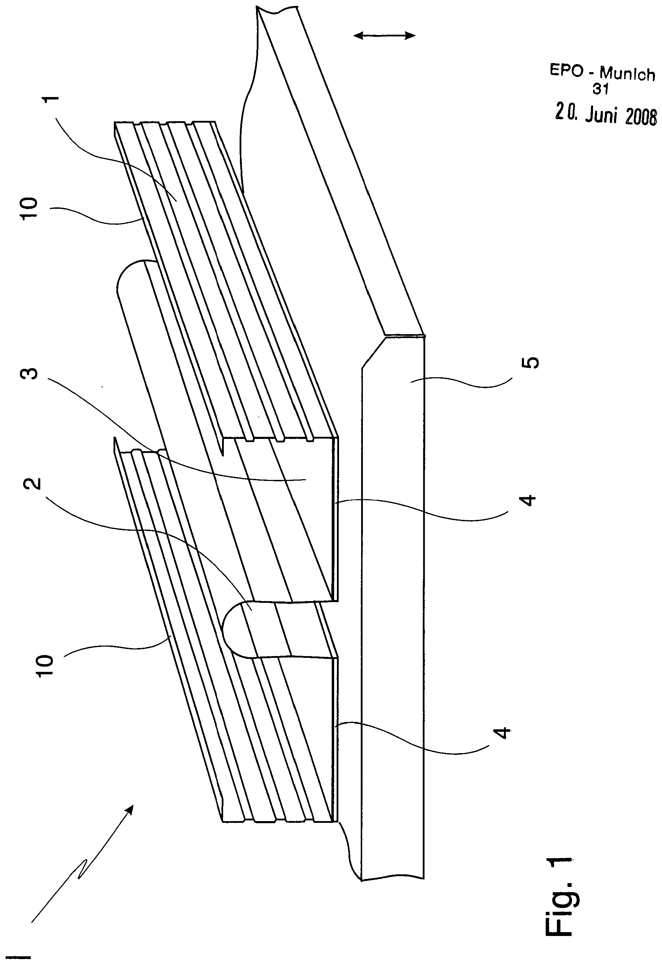

Fig. 1 zeigt eine dreidimensionale Darstellung eines Teiles der erfindungsgemäßen Wand- oder Deckenverkleidung. Dabei beschränkt sich die Darstellung hier auf einen erfindungswesentlichen Teil der Wand- oder Deckenverkleidung, nämlich auf die Darstellung des Halterungsprofils 1 und der Deckplatte 5. Mit dem Bezugszeichen I und einem Pfeil ist allgemein die Wand- oder Deckenverkleidung bezeichnet. In der Teildarstellung der Fig. 1 ist lediglich das Halterungsprofil 1 dargestellt. Das Halterungsprofil 1 weist seitlich gesehen zwei Schenkel auf, die an ihrer Oberseite Abwinklungen 10 besitzen. Die Schenkel besitzen ebenfalls Profilierungen, die zur Befestigung von dem Halterungsprofil an Verbindungsblechen der Unterkonstruktion (nicht dargestellt) besitzen. Auch die Abwinklungen 10 erfüllen diese Funktion. Auf der dem Raum zugewandten Seite beziehungsweise der Deckplatte 5 zugewandten Seite befinden sich Auflageflächen 3. Diese dienen der satten Auflage der Deckplatte 5.

In der dargestellten Varianten gemäß Fig. 1 ist an den Auflageflächen 3 jeweils ein Magnetstreifen 4 befestigt, der zur magnetischen Befestigung der Deckplatte 5 beziehungsweise Deckbahn dient. Diese lässt sich dadurch selbstverständlich sehr einfach an der Unterkonstruktion befestigen, indem sie lediglich dort angelegt wird und durch die Magnetkraft bewirkt, wird die Deckplatte, die aus magnetisch wirksamen Material gebildet ist, angezogen und dauerhaft dort fixiert. Im Wartungsfall kann allerdings die Deckplatte 5 dann problemlos wieder abgenommen werden, weshalb die in Fig. 1 dargestellte Variante der Erfindung besonders vorteilhaft ist. Die erfindungsgemäßen Effekte, wonach im Wartungsfall ein problemloser Zugang zu dem nicht dargestellten Rohrleitungsregister ermöglicht wird, wird in dieser Variante besonders einfach erreicht.

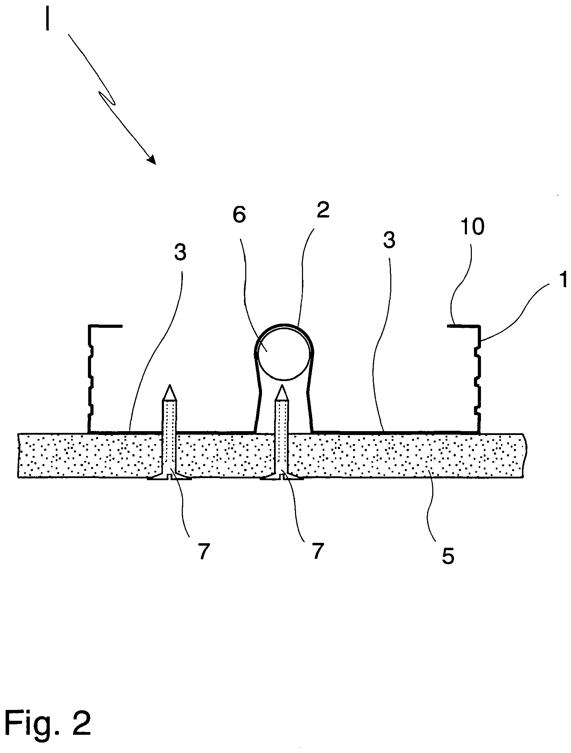

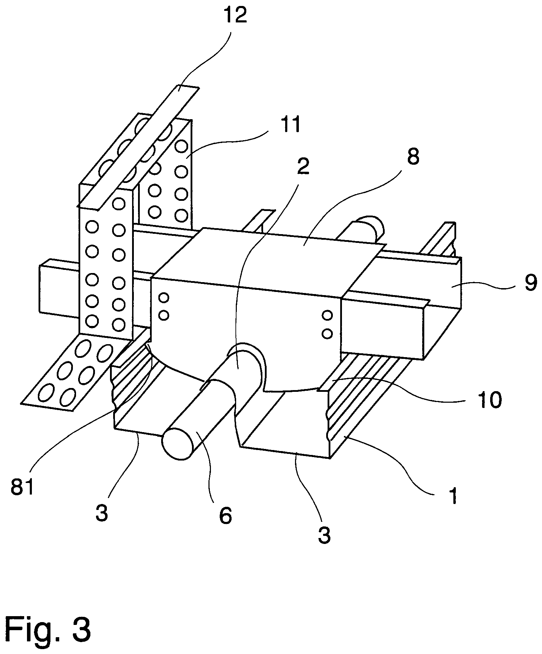

Zwischen den beiden Auflageflächen 3 befindet sich ein Aufnahmemittel für das Rohrleitungsregister 6 (Fig. 2 und 3), welches als Kanal ausgebildet ist. Der Kanal ist dabei nutenförmig beziehungsweise U-förmig ausgebildet und besitzt auf seiner dem Raum abgewandten Seite eine Rundung. Diese entspricht der äußeren Rundung des Rohres vom Rohrleitungsregister 6. Durch die beiden Linien der senkrechten Schenkel des Kanals 2 wird angedeutet, dass dort eine gewisse Verjüngung vorgesehen ist, um eine gewisse Spannkraft zu erzeugen, die der Fixierung des Rohres dient. Mit dem Doppelpfeil ist angedeutet, dass sich die Deckplatte 5 sowohl nach oben als auch nach unten bewegen lässt und dies wohl für den Montage- als auch den Wartungsfall vorgesehen ist. Entgegen den im Stand der Technik bekannten Lösungen einer Wand- oder Deckenverkleidung mittels eines Magnetsystems zeichnet sich die erfindungsgemäße Lösung der Fig. 1 dadurch aus, dass die Magnetstreifen sehr flach, nämlich ca. 0,5 bis maximal 3 mm stark sind, wodurch der Platzbedarf erheblich verringert ist. Des Weiteren wird der Wärmeübergang zur Deckplatte 5 nicht behindert und die Befestigung der Magnetstreifen 4 lässt sich äußerst einfach bewerkstelligen, nämlich durch selbstklebende Oberflächen, die nach Abziehen einer Schutzfolie an dem Halterungsprofil 1 befestigbar sind. Im Stand der Technik war es notwendig, Magnete, die wesentliche stärker ausgebildet sind, seitlich neben den Auflageflächen 3 in zusätzlich geformten Ausnehmungen vorzusehen. Dadurch ist der Aufwand für die Fertigung des Halterungsprofils wesentlich erhöht. Die Erfindung stellt eine günstigere Lösung zur Verfügung.

Fig. 2 zeigt eine Variante der Erfindung, bei der eine Gipskarton- oder Fermazellplatte als Deckplatte 5 an dem Halterungsprofil 1 befestigt ist. Zur Befestigung dienen dabei Schrauben 7. Üblicherweise werden bei der Herstellung von Deckenverkleidungen oder Wandverkleidungen Schrauben mit selbstschneidendem Gewinde oder Schrauben mit einer Bohrspitze verwendet. Wie in der Fig. 2 dargestellt, ist es ein wesentlicher Vorteil der Erfindung, dass der Kanal 2 so ausgebildet ist, dass das Rohrleitungsregister 6 ausreichend weit von der Deckplatte 5 beabstandet ist, sodass eine Verletzung des Rohrleitungsregisters durch die Schraube 7 im Falle einer Fehlbohrung nicht erfolgen kann. Selbstverständlich soll die Schraube 7 eigentlich an der rechten Auflagefläche 3 vorgesehen sein. Die Darstellung wurde jedoch so gewählt, um zu verdeutlichen, dass ein Vorteil der Erfindung die Ausgestaltung des Kanals 2 ist, die verhindert, dass eine Schraube, wenn sie in entsprechender Länge verwendet wird, das Rohrleitungsregister 6 nicht zu zerstören vermag. Alle anderen Bezugszeichen sind bereits vorgestellt worden, weshalb auf eine erneute Vorstellung verzichtet wird.

Die Fig. 3 zeigt einen Ausschnitt durch eine weitere Variante der Erfindung, wobei hier das Augenmerk insbesondere auf die Ausgestaltung der Unterkonstruktion gerichtet ist. Die Unterkonstruktion besteht aus mehreren Elementen. So ist beispielsweise ein Querträger 9 vorgesehen, auf dem ein Verbindungsadapter 8 aufliegt. An dem Verbindungsadapter 8 ist das Halterungsprofil 1 befestigt. Dazu ist eine Haltenase 81 an dem Verbindungsadapter 8 vorgesehen, in den das Halterungsprofil 1 sozusagen eingeklemmt wird. Des Weiteren sind Abstandshalter 11 und Längsträger 12 dargestellt, die nur ein Beispiel für eine Unterkonstruktion darstellen. Die Unterkonstruktion kann dabei aus Blech- beziehungsweise Stahlprofilen gebildet sein. Selbstverständlich ist es auch möglich, die Unterkonstruktion teilweise aus einer Holzlattung vorzusehen, auf die dann das Halterunsprofil 1 vorzugsweise mit dem Verbindungsadapter 8 aufgebracht wird.

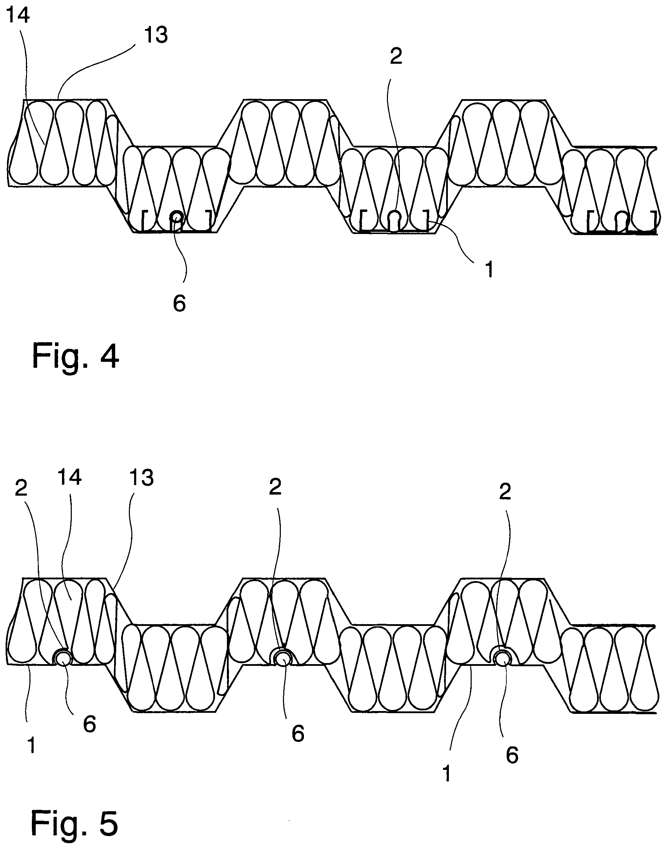

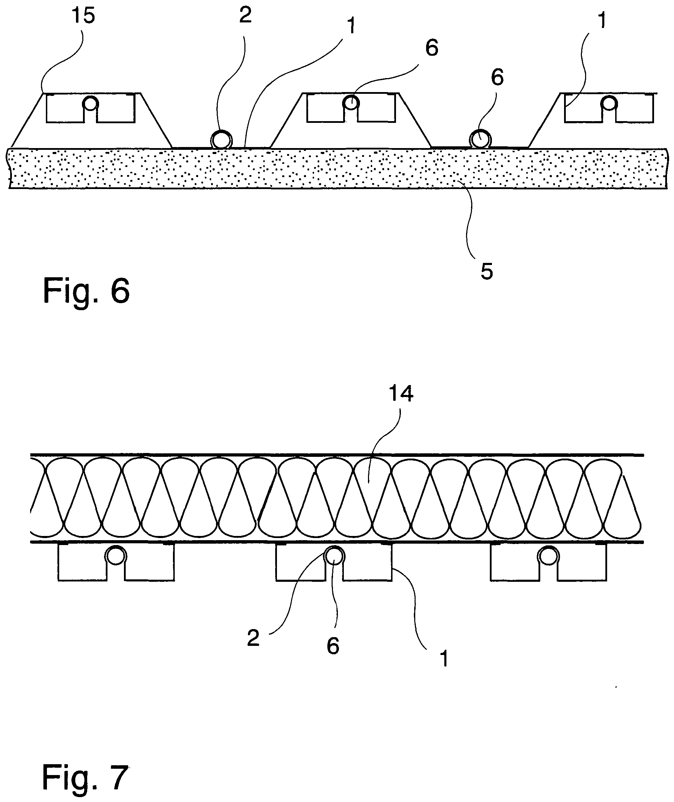

Die Fig. 4 bis 6 zeigen eine Wellblech-, Sandwich- beziehungsweise Trapezblechkonstruktion mit integrierter Wand- beziehungsweise Deckenverkleidung nach der Erfindung. Der wesentliche Kern dieser Ausgestaltung ist, dass das Halterungsprofil 1 entweder an oder in der Wellblech- beziehungsweise Trapezblech- oder Sandwichkonstruktion integriert ist beziehungsweise dort befestigt ist. Besonders günstig ist eine Ausgestaltung, wie sie in Fig. 5 dargestellt ist, wo die Halterungsprofile sozusagen in die untere Bahn der Trapezblechkonstruktion eingeformt sind. Die Trapezblechkonstruktion ist in den einzelnen Darstellungen entweder mit dem Bezugszeichen 13 beziehungsweise mit dem Bezugszeichen 15 bezeichnet. Dabei unterscheidet sich die Ausgestaltung lediglich darin, dass in Fig. 6 eine nur einschalige Konstruktion gewählt wurde, während in Fig. 4, 5 und 7 eine zweischalige Konstruktion vorgesehen ist. In Fig. 4 sind die Halterungsprofile 1 in die Trapezblechkonstruktion eingelegt beziehungsweise dort befestigt. In Fig. 5 ist mit Hilfe eines speziellen Werkzeuges der Kanal 2 in die untere Lage zur Trapezblechkonstruktion 13 eingeformt. Der Kanal 2 nimmt dabei ebenfalls das Rohrleitungsregister 6 auf. In der Ausgestaltung gemäß Fig. 5 kann dabei auf die Beabstandung, wie sie vorher beschrieben wurde, verzichtet werden. In Fig. 6 ist dargestellt, dass eine einfache Blechkonstruktion mit Halterungsprofilen 1 nachgerüstet wurde. Auch hier weisen die Kanäle 2 mit ihrer offenen Seite nach unten, sodass der Zugang zum Rohrleitungsregister 6 für Wartungsfälle gewährleistet ist. Mit dem Bezugszeichen 5 ist die Deckplatte bezeichnet. Die Ausgestaltung der Fig. 7 dagegen zeigt eine Sandwichplatte, die mit Dämmmaterial 14 gefüllt ist. Unterhalb der Sandwichplatte sind auch hier die Halterungsprofile 1 angeordnet, die Kanäle 2 aufweisen und die Kanäle das Rohrleitungsregister 6 aufnehmen. Nicht dargestellt ist die Deckplatte 5, die, wie in den anderen Figuren bereits vorgestellt, hier noch angeordnet werden kann.

## Patentansprüche

1. Wand- oder Deckenverkleidung mit einem Kühl- und/oder Heizungssystem und wenigstens einer Deckplatte (5) oder einer Deckbahn, wobei die Wand- oder Deckenverkleidung mit wenigstens einem Halterungsprofil an der Wand oder Decke eines Bauwerkes befestigbar ist, wobei das Halterungsprofil (1) in befestigtem Zustand auf einer zu einem zu kühlenden beziehungsweise zu heizenden Raum des Bauwerkes auf der der Deckplatte (5) oder Deckbahn zugewandten Seite ein Aufnahmemittel für das Rohrleitungsregister (6) des Kühl- und/oder Heizungssystems aufweist, dessen Aufnahmeöffnung dem Raum zugewandt ist und an dem Halterungsprofil (1) seitlich gesehen zwei Schenkel vorgesehen sind, die an der Oberseite, d. h. an der in befestigtem Zustand der Wand oder Decke des Bauwerks zugewandten Seite, d. h. auf der der Deckplatte (5) oder Deckbahn abgewandten Seite, Abwinklungen (10) besitzen, **dadurch gekennzeichnet, dass** die Abwinkelungen so ausgestaltet sind, dass sie zur Befestigung des Halterungsprofils an Verbindungsblechen einer Unterkonstruktion dienen können.

2. Wand- oder Deckenverkleidung nach Anspruch 1, **dadurch gekennzeichnet, dass** das Aufnahmemittel als Kanal (2) ausgebildet ist, der in seiner Breite so bemessen ist, dass das Rohrleitungsregister (6) aufgrund der Spannkraft des Materials des Halterungsprofils (1) gehalten ist.

3. Wand- oder Deckenverkleidung nach Anspruch 2, **dadurch gekennzeichnet, dass** der Kanal (2) U-förmig ausgebildet ist und sich in Richtung der Wand oder Decke beabstandet von wenigstens einer an dem Halterungsprofil (1) vorgesehenen dem Raum zugewandten Auflagefläche (3) erstreckt, wobei die Auflagefläche zur Auflage von Deckplatten (5) bzw. einer oder mehreren Deckbahnen der Wand- oder Deckenverkleidung vorgesehen ist.

4. Wand- oder Deckenverkleidung nach einem der Ansprüche 2 bis 3, **dadurch gekennzeichnet, dass** zwei Auflageflächen (3) vorgesehen sind und das als Kanal (2) ausgebildete Aufnahmemittel zwischen den beiden Auflageflächen (3), insbesondere mittig angeordnet ist und/oder das Aufnahmemittel zumindest auf seiner dem Raum abgewandten Seite eine Rundung aufweist, die der Rundung des Rohres entspricht beziehungsweise zu dieser korrespondiert.

5. Wand- oder Deckenverkleidung nach einem der Ansprüche 3 bis 4, **dadurch gekennzeichnet, dass** an dem Halterungsprofil (1) und/oder der Deckplatte (5) Befestigungselemente und/oder - mittel zur lösbar festen Befestigung der Deckplatte (5) beziehungsweise einer Deckbahn an dem Halterungsprofil (1) vorgesehen sind.

6. Wand- oder Deckenverkleidung nach Anspruch 5, **dadurch gekennzeichnet, dass** die Befestigungsmittel, klebende beziehungsweise selbstklebende, haftende beziehungsweise selbsthaftende und/oder magnetische Eigenschaften aufweisen und/oder als Befestigungselement ein Klettverschlusß, vorzugsweise ein Klettband, eine Clipsverbindung, Schraubverbindung oder dergleichen vorgesehen ist und/oder der Kanal (2) in seiner Tiefe so bemessen ist, dass durch die Deckplatten (5) geführte Befestigungsmittel, wie z. B. Schrauben (7) mit selbstschneidenden Gewinde, das Rohrleitungsregister (6) nicht erreichten beziehungsweise beschädigen können.

7. Wand- oder Deckenverkleidung nach einem der Ansprüche 5 bis 6, **dadurch gekennzeichnet, dass** an wenigstens einer der Auflageflächen (3) ein Magnet, insbesondere als Magnetstreifen (4) ausgebildet, vorgesehen ist, um Deckplatten (5) aus magnetisch wirksamen Material, wie z. B. Stahlblech oder -folie durch die Magnetkraft zu befestigen und/oder das Halterungsprofil (1) aus magnetisch wirksamen Material gebildet ist und die Deckplatte (5) einen korrespondierend dazu vorgesehenen Magnetstreifen aufweist.

8. Wand- oder Deckenverkleidung nach einem der Ansprüche 5 bis 7, **dadurch gekennzeichnet, dass** als Deckplatte (5) beziehungsweise -bahn eine Metallfolie, ein Blech, vorzugsweise farb- oder folienbeschichtet, eine Gipskarton- beziehungsweise Fermazellplatte, eine Kunststoff-, eine PCM-Platte (phase change material) oder dergleichen vorgesehen ist und/oder das Halterungsprofil (1) an einer Unterkonstruktion (8, 9, 11, 12) vorgesehen ist, die die Verbindung zur Decke beziehungsweise Wand bildet.

9. Wand- oder Deckenverkleidung nach einem der Ansprüche 5 bis 8, **dadurch gekennzeichnet, dass** die Deckplatte (5) beziehungsweise -bahn aus elektrisch leitendem Material gebildet ist und/oder aus transparentem Material, als Schallschutzelement mit Perforierung und/oder als Deckelement mit endgültiger Oberfläche, z. B. mit Folienbeschichtung oder PCM-Beschichtung gebildet ist und/oder die Deckplatte (5) als Beleuchtungselement vorgesehen ist.

10. Wand- oder Deckenverkleidung nach einem oder mehreren der vorhergehenden Ansprüche, **dadurch gekennzeichnet, dass** das Halterungsprofil (1) in oder an einem Decken- oder Wandelement, z. B. als Wellblech oder Trapezblechkonstruktion (13, 15), vorgesehen ist.

11. Wand- oder Deckenverkleidung nach Anspruch 10, **dadurch gekennzeichnet, dass** das Halterungsprofil (1) in die Wellblech- oder Trapezblechkonstruktion (13, 15) eingeformt und/oder das Halterungsprofil (1) in oder an der Wellblech- beziehungsweise Trapezblechkonstruktion (13, 15) befestigt ist.

12. Wand- oder Deckenverkleidung nach einem der Ansprüche 10 und 11, **dadurch gekennzeichnet, dass** das Aufnahmemittel für das Rohrleitungsregister (6) sich in den Sicken der Trapezbeziehungsweise Wellblechkonstruktion (13, 15) befindet und/oder das Rohrleitungsregister (6) zur Aufnahme eines Heiz- beziehungsweise Kühlsystems vorgesehen ist und/oder das Rohrleitungsregister (6) als brennstoffverbrennendes Objekt ausgebildet ist.

13. Wand- oder Deckenverkleidung nach einem der vorhergehenden Ansprüche 10 bis 12, **dadurch gekennzeichnet, dass** das Rohrleitungsregister (6) als Leerrohr für Kabel, Schläuche oder elektrische Heizleiter ausgebildet ist.

14. Wand- oder Deckenverkleidung nach einem der vorhergehen den Ansprüche 10 bis 13, **dadurch gekennzeichnet, dass** das Halterungsprofil (1) in der Trapez- beziehungsweise Wellblechkonstruktion (13, 15) statisch wirksam angeordnet ist und/oder die Oberfläche der Trapez- beziehungsweise Wellblechkonstruktion (13, 15) mit statisch wirksamen Material bekleidet beziehungsweise kaschiert ist.

15. Wand- oder Deckenverkleidung nach einem der vorhergehen den Ansprüche 10 bis 14, **dadurch gekennzeichnet, dass** die Trapez- beziehungsweise Wellblechkonstruktion (13, 15) elementartig aufgebaut ist und/oder die gesamte Elementoberfläche, die dem Raum zugewandt ist, als Wärmebeziehungsweise Kältestrahler ausgebildet ist.

16. Wand- oder Deckenverkleidung nach einem der vorhergehen den Ansprüche 10 bis 15, **dadurch gekennzeichnet, dass** zumindest die dem Raum zugewandte Seite der Trapez- beziehungsweise Wellblechkonstruktion (13, 15) mit einer wärme- beziehungsweise kältestrahlenden Beschichtung versehen ist und/oder die Trapez- beziehungsweise Wellblechkonstruktion als Sandwichelement mit vorzugsweise integrierter Dämmmaterialschicht (14) ausgebildet ist und/oder das Dämmmaterial statisch wirksame Eigenschaften besitzt und/oder eine Oberflächenbeschichtung vorgesehen ist, die vorzugsweise aus wärmeleitendem Material besteht.

## Claims

1. Wall or ceiling cladding with a cooling and/or heating system and at least one cover panel (5) or a cover sheet, wherein the wall or ceiling cladding can be fastened to the wall or ceiling of a building by means of at least one retaining profile, wherein the retaining profile (1), in the fastened state, has, on a side facing toward a room of the building that is to be cooled or heated and the cover panel (5) or cover sheet, a receiving means for the pipe register (6) of the cooling and/or heating system, the receiving opening of which receiving means faces toward the room, and two limbs are provided on the retaining profile (1), which limbs, viewed from the side, have on the upper side, i.e. on the side facing toward the wall or ceiling of the room in the fastened state, i.e. on the side facing away from the cover panel (5) or cover sheet, angled portions (10), **characterised in that** the angled portions are configured in such a way that they can be used for fastening the retaining profile to connecting plates of a substructure.

2. Wall or ceiling cladding according to claim 1, **characterised in that** the receiving means is formed as a channel (2) which is dimensioned in its width such that the pipe register (6) is held by virtue of the resilience of the material of the retaining profile (1).

3. Wall or ceiling cladding according to claim 2, **characterised in that** the channel (2) is U-shaped and extends in the direction of the wall or ceiling spaced apart from at least one support surface (3) provided on the retaining profile (1) and facing toward the room, the support surface being provided for supporting cover panels (5) or one or more cover sheets of the wall or ceiling cladding.

4. Wall or ceiling cladding according to any one of claims 2 to 3, **characterised in that** two support surfaces (3) are provided and the receiving means in the form of a channel (2) is arranged between the two support surfaces (3), in particular centrally, and/or the receiving means has, at least on its side facing away from the room, a curvature which conforms to the curvature of the pipe or corresponds to the latter.

5. Wall or ceiling cladding according to any one of claims 3 to 4, **characterised in that** fastening elements and/or means are provided on the retaining profile (1) and/or the cover panel (5) for the releasably fixed fastening of the cover panel (5) or a cover sheet to the retaining profile (1).

6. Wall or ceiling cladding according to claim 5, **characterised in that** the fastening means have adhesive or self-adhesive, adherent or self-adherent and/or magnetic properties and/or a hook-and-loop fastener, preferably a hook-and-loop strip, a clip connection, screw connection or the like is provided as the fastening element and/or the channel (2) is dimensioned in its depth such that fastening means, such as screws (7) with self-tapping threads, guided through the cover panels (5) cannot reach or damage the pipe register (6).

7. Wall or ceiling cladding according to any one of claims 5 to 6, **characterised in that** a magnet, in particular in the form of a magnetic strip (4), is provided on at least one of the support surfaces (3) in order to fasten cover panels (5) of magnetically active material, such as, for example, sheet steel or steel foil, by magnetic force and/or the retaining profile (1) is formed of magnetically active material and the cover panel (5) has a magnetic strip provided correspondingly thereto.

8. Wall or ceiling cladding according to any one of claims 5 to 7, **characterised in that** a metal foil, a sheet, preferably colour- or foil-coated, a plasterboard or fibreboard, a plastic, a PCM plate (phase change material) or the like is provided as cover panel (5) or sheet and/or the retaining profile (1) is provided on a substructure (8, 9, 11, 12) which forms the connection to the ceiling or wall.

9. Wall or ceiling cladding according to any one of claims 5 to 8, **characterised in that** the cover panel (5) or sheet is formed from electrically conductive material and/or from transparent material, as a sound insulation element with perforation and/or as a ceiling element with a final surface, e.g. with foil coating or PCM coating, and/or the cover panel (5) is provided as a lighting element.

10. Wall or ceiling cladding according to any one or more of the preceding claims, **characterised in that** the retaining profile (1) is provided in or on a ceiling or wall element, e.g. as a corrugated sheet or trapezoidal sheet structure (13, 15).

11. Wall or ceiling cladding according to claim 10, **characterised in that** the retaining profile (1) is formed into the corrugated sheet or trapezoidal sheet structure (13, 15) and/or the retaining profile (1) is fastened in or on the corrugated sheet or trapezoidal sheet structure (13, 15).

12. Wall or ceiling cladding according to any one of claims 10 and 11, **characterised in that** the receiving means for the pipe register (6) is located in the corrugations of the trapezoidal or corrugated sheet structure (13, 15) and/or the pipe register (6) is provided for receiving a heating or cooling system and/or the pipe register (6) is designed as a fuel-burning object.

13. Wall or ceiling cladding according to any one of the preceding claims 10 to 12, **characterised in that** the pipe register (6) is formed as an empty pipe for cables, hoses, or electrical heating elements.

14. Wall or ceiling cladding according to any one of the preceding claims 10 to 13, **characterised in that** the retaining profile (1) is arranged in a statically effective manner in the trapezoidal or corrugated sheet structure (13, 15) and/or the surface of the trapezoidal or corrugated sheet structure (13, 15) is clad or laminated with statically effective material.

15. Wall or ceiling cladding according to any one of the preceding claims 10 to 14, **characterised in that** the trapezoidal or corrugated sheet structure (13, 15) is constructed in an element-like manner and/or the entire element surface facing the room is formed as a heat or cold radiator.

16. Wall or ceiling cladding according to any one of the preceding claims 10 to 15, **characterised in that** at least the side of the trapezoidal or corrugated sheet structure (13, 15) facing toward the room is provided with a heat-radiating or cold-radiating coating and/or the trapezoidal or corrugated sheet structure is formed as a sandwich element with preferably integrated insulating material layer (14) and/or the insulating material has statically active properties and/or a surface coating is provided which preferably consists of heat-conducting material.

## Revendications

1. Revêtement de mur ou de plafond avec un système de refroidissement et/ou de chauffage et au moins une plaque de recouvrement (5) ou un voile de recouvrement, dans lequel le revêtement de mur ou de plafond peut être fixé au mur ou au plafond d'une construction avec au moins un profilé de support, dans lequel le profilé de support (1), à l'état fixé, présente, sur le côté tourné vers la plaque de recouvrement (5) ou le voile de recouvrement sur une pièce de la construction devant être refroidie ou chauffée, un moyen de réception pour le registre des tuyaux (6) du système de refroidissement et/ou de chauffage, dont l'ouverture de réception est tournée vers la pièce, et deux branches sont prévues sur le profilé de support (1), vu latéralement, lesquelles possèdent des parties coudées (10) sur le côté supérieur, c'est-à-dire sur le côté tourné vers le mur ou le plafond de la construction à l'état fixé, c'est-à-dire sur le côté opposé à la plaque de recouvrement (5) ou au voile de recouvrement, **caractérisé en ce que** les parties coudées sont conçues de sorte qu'elles peuvent être utilisées pour fixer le profilé de support à des tôles de connexion d'une structure porteuse.

2. Revêtement de mur ou de plafond selon la revendication 1, **caractérisé en ce que** le moyen de réception est réalisé comme un canal (2) qui est dimensionné dans sa largeur de sorte que le registre des tuyaux (6) est maintenu par la force de tension du matériau du profilé de support (1).

3. Revêtement de mur ou de plafond selon la revendication 2, **caractérisé en ce que** le canal (2) est réalisé en forme de U et s'étend en direction du mur ou plafond à une distance d'au moins une surface d'appui (3) prévue sur le profilé de support (1) et orientée vers la pièce, dans lequel la surface d'appui est prévue pour soutenir des plaques de recouvrement (5) ou un ou plusieurs voiles de recouvrement du revêtement de mur ou de plafond.

4. Revêtement de mur ou de plafond selon l'une quelconque des revendications 2 à 3, **caractérisé en ce que** deux surfaces d'appui (3) sont prévues et le moyen de réception réalisé comme un canal (2) est agencé entre les deux surfaces d'appui (3), en particulier au centre, et/ou le moyen de réception présente, au moins sur son côté opposé à la pièce, une courbure qui correspond à la courbure du tuyau ou correspond à cette dernière.

5. Revêtement de mur ou de plafond selon l'une quelconque des revendications 3 à 4, **caractérisé en ce que** des éléments et/ou moyens de fixation sont prévus sur le profilé de support (1) et/ou la plaque de recouvrement (5) pour la fixation amovible de la plaque de recouvrement (5) ou d'un voile de recouvrement sur le profilé de support (1).

6. Revêtement de mur ou de plafond selon la revendication 5, **caractérisé en ce que** les moyens de fixation présentent des propriétés adhésives ou autocollantes, adhérentes ou autoadhésives et/ou magnétiques et/ou une fermeture Velcro, de préférence une bande Velcro, une liaison par clip, une liaison par vis ou similaire est prévue comme élément de fixation et/ou le canal (2) est dimensionné dans sa profondeur de sorte que des moyens de fixation, tels que des vis (7) à filetage autotaraudeur, guidés à travers les plaques de recouvrement (5) ne puissent atteindre ou endommager le registre des tuyaux (6).

7. Revêtement de mur ou de plafond selon l'une quelconque des revendications 5 à 6, **caractérisé en ce qu'**un aimant, en particulier sous la forme d'une bande magnétique (4), est prévu sur au moins l'une des surfaces d'appui (3) pour fixer par la force magnétique des plaques de recouvrement (5) en matériau magnétiquement actif, par exemple une tôle ou une feuille d'acier, et/ou le profilé de support (1) est formé d'un matériau magnétiquement actif et la plaque de recouvrement (5) présente une bande magnétique prévue en conséquence.

8. Revêtement de mur ou de plafond selon l'une quelconque des revendications 5 à 7, **caractérisé en ce qu'**une feuille métallique, une tôle, de préférence peinte ou recouverte d'un film, une plaque de plâtre ou d'une plaque fermacellulaire, une plaque en matière plastique, une plaque PCM (matériau à changement de phase) ou similaire est prévue comme plaque (5) ou voile de recouvrement et/ou le profilé de support (1) est prévu sur une structure porteuse (8, 9, 11, 12) qui forme la liaison avec le plafond ou le mur.

9. Revêtement de mur ou de plafond selon l'une quelconque des revendications 5 à 8, **caractérisé en ce que** la plaque (5) ou le voile de recouvrement est formé(e) d'un matériau électriquement conducteur et/ou est formée d'un matériau transparent, en tant qu'élément d'absorption acoustique avec perforation et/ou en tant qu'élément de recouvrement avec une surface finale, par exemple avec une couche de film ou une couche PCM, et/ou la plaque de recouvrement (5) est prévue comme élément d'éclairage.

10. Revêtement de mur ou de plafond selon l'une quelconque ou plusieurs des revendications précédentes, **caractérisé en ce que** le profilé de support (1) est prévu dans ou sur un élément de plafond ou de mur, par exemple comme tôle ondulée ou structure de tôle trapézoïdale (13, 15).

11. Revêtement de mur ou de plafond selon la revendication 10, **caractérisé en ce que** le profilé de support (1) est moulé dans la structure en tôle ondulée ou en tôle trapézoïdale (13, 15) et/ou le profilé de support (1) est fixé dans ou sur la structure en tôle ondulée ou en tôle trapézoïdale (13, 15).

12. Revêtement de mur ou de plafond selon l'une quelconque des revendications 10 et 11, **caractérisé en ce que** le moyen de réception pour le registre des tuyaux (6) se trouve dans les moulures de la structure en tôle trapézoïdale ou ondulée (13, 15) et/ou le registre des tuyaux (6) est prévu pour recevoir un système de chauffage ou de refroidissement et/ou le registre des tuyaux (6) est réalisé comme un objet brûlant du combustible.

13. Revêtement de mur ou de plafond selon l'une quelconque des revendications précédentes 10 à 12, **caractérisé en ce que** le registre des tuyaux (6) est réalisé comme tuyau vide pour câbles, tubes ou conducteurs de chauffage électrique.

14. Revêtement de mur ou de plafond selon l'une quelconque des revendications précédentes 10 à 13, **caractérisé en ce que** le profilé de support (1) est agencé de manière statiquement efficace dans la structure en tôle trapézoïdale ou ondulée (13, 15) et/ou la surface de la structure en tôle trapézoïdale ou ondulée (13, 15) est revêtue ou stratifiée avec un matériau statiquement efficace.

15. Revêtement de mur ou de plafond selon l'une quelconque des revendications précédentes 10 à 14, **caractérisé en ce que** la structure en tôle trapézoïdale ou ondulée (13, 15) est réalisée de manière élémentaire et/ou toute la surface de l'élément qui est tournée vers la pièce est réalisée comme un radiateur de chaleur ou de froid.

16. Revêtement de mur ou de plafond selon l'une quelconque des revendications précédentes 10 à 15, **caractérisé en ce qu'au** moins le côté de la structure en tôle trapézoïdale ou ondulée (13, 15) tourné vers la pièce est pourvu d'une couche rayonnant la chaleur ou le froid et/ou la structure en tôle trapézoïdale ou ondulée est réalisée comme un élément sandwich avec de préférence une couche de matériau isolant intégrée (14) et/ou le matériau isolant possède des propriétés statiques efficaces et/ou une couche de surface, qui consiste de préférence en un matériau conducteur de chaleur, est prévue.
